# DEMANDE DE BREVET EUROPEEN

(11) **EP 4 497 545 A1**
(43) Date de publication de la demande: **29.01.2025**
(21) Numéro de dépôt: 24191068.6
(22) Date de dépôt: 26.07.2024
(51) Int. Cl.: B25B 31/00

(54) **OUTIL DE POSE POUR FIXATION TEMPORAIRE ET ENSEMBLE DE POSE ASSOCIÉ**

(30) Priorité: 28.07.2023 FR 2308209
(71) Demandeur: LISI Aerospace, 75012 Paris (FR)
(72) Inventeur: BRACHET, Julien, 18500 MEHUN SUR YEVRE (FR)
(74) Mandataire: Lavoix

(57) **Abrégé**

L'invention concerne un outil (14) de pose, comprenant :
- un corps (50) d'outil comprenant une première ouverture apte à bloquer l'extrémité axiale du corps (26) d'une fixation (12) ;
- un dispositif (52) d'actionnement, mobile en rotation par rapport au corps d'outil et comprenant une deuxième ouverture apte à bloquer un élément (28) d'actionnement de la fixation ;
- une chambre (120) de pression, ménagée dans le corps d'outil ;
- un conduit (122), reliant la chambre de pression à la première ouverture (62) ;
- un élément (124) de blocage, mobile dans le conduit entre une position rétractée et une position saillante ; et
- une arrivée (55) de fluide, ouvrant sur la chambre de pression.

Une entrée de fluide dans la chambre de pression déplace l'élément de blocage (124) vers la position saillante.

## Description

La présente invention concerne un outil de pose, pour l'assemblage d'une fixation avec au moins deux structures préalablement percées, ladite fixation comprenant : un corps de fixation, s'étendant selon un premier axe ; et un élément d'actionnement, en saillie par rapport à une extrémité axiale du corps de fixation, l'élément d'actionnement étant mobile en rotation par rapport au corps de fixation.

L'outil de pose comprend : un corps d'outil de forme tubulaire, s'étendant selon un deuxième axe ; une extrémité axiale du corps d'outil comprenant une première ouverture apte à recevoir et à bloquer en rotation l'extrémité axiale du corps de fixation ; un dispositif d'actionnement, reçu à l'intérieur du corps d'outil et mobile en rotation par rapport audit corps d'outil, le dispositif d'actionnement définissant un logement interne, une extrémité axiale du dispositif d'actionnement comprenant une deuxième ouverture débouchant sur le logement interne, la deuxième ouverture étant apte à recevoir et à bloquer en rotation l'élément d'actionnement de la fixation.

Une telle fixation et un outil de pose adapté sont notamment décrits dans le document EP3781825, au nom de la Demanderesse.

L'insertion de la fixation dans l'outil de pose précité nécessite l'application d'un effort important, de l'ordre de 5 kg. Un tel effort doit être maintenu sous forme de pression au cours de la pose ou de la dépose de la fixation. Or, les systèmes actuels de maintien de pression ont tendance à se dérégler au cours du temps.

La présente invention a pour but de proposer un outil de pose équipé d'un mécanisme amélioré de maintien de la fixation. A cet effet, l'invention a pour objet un outil de pose du type précité, comprenant en outre : une chambre de pression, de forme annulaire, ménagée dans le corps d'outil autour de la première ouverture ; au moins un conduit, disposé radialement par rapport au deuxième axe et reliant la chambre de pression à la première ouverture ; au moins un élément de blocage, mobile dans l'au moins un conduit entre une position rétractée et une position saillante dans la première ouverture ; et une première arrivée de fluide, ouvrant sur la chambre de pression.

L'outil de pose est configuré de sorte qu'une entrée de fluide dans la chambre de pression soit apte à déplacer l'au moins un élément de blocage vers la position saillante.

Suivant d'autres aspects avantageux de l'invention, l'outil de pose comporte l'une ou plusieurs des caractéristiques suivantes, prises isolément ou suivant toutes les combinaisons techniquement possibles :
- L'outil de pose comprend : une pluralité de conduits répartis angulairement autour du deuxième axe ; et une pluralité d'éléments de blocage, chacun desdits éléments de blocage étant mobile dans l'un desdits conduits entre la position rétractée et la position saillante, les éléments de blocage étant préférentiellement des billes ;
- L'outil de pose comprend en outre : un piston d'éjection, mobile axialement dans le logement interne, de sorte à définir une chambre d'éjection à l'intérieur dudit logement interne ; et une deuxième arrivée de fluide, ouvrant sur la chambre d'éjection; l'outil de pose étant configuré de sorte qu'une surpression de fluide dans la chambre d'éjection soit apte à déplacer le piston d'éjection vers la deuxième ouverture ;
- L'outil de pose comprend en outre une tige d'éjection s'étendant selon le deuxième axe dans le logement interne du dispositif d'actionnement, une première extrémité de la tige d'éjection étant fixée au piston d'éjection, une seconde extrémité de la tige d'éjection étant orientée vers la première ouverture du corps d'outil ;
- L'outil de pose comprend en outre un ressort de compression disposé dans le logement interne autour de la tige d'éjection, entre une couronne interne du dispositif d'actionnement, disposée à proximité de la deuxième ouverture, et le piston ;
- le dispositif d'actionnement comporte : une clé, apte à être entraînée en rotation par un moteur ; et un corps de clé, comprenant le logement et la deuxième ouverture ; un jeu axial étant ménagé entre la clé et le corps de clé ;
- au moins une des première et deuxième ouvertures de l'outil est équipée d'une cage à galets ou d'une forme anti-rotation, apte à bloquer en rotation une surface externe du corps de fixation et/ou de l'élément d'actionnement de la fixation.

L'invention se rapporte en outre à un ensemble de pose comprenant : une fixation pour l'assemblage temporaire d'au moins deux structures préalablement percées, ladite fixation comprenant : un corps de fixation, s'étendant selon un premier axe ; et un élément d'actionnement, en saillie par rapport à une extrémité axiale du corps de fixation, l'élément d'actionnement étant mobile en rotation par rapport au corps de fixation ; et un outil de pose tel que décrit ci-dessus, la première ouverture étant configurée pour recevoir et bloquer en rotation l'extrémité axiale du corps de fixation, la deuxième ouverture étant configurée pour recevoir et à bloquer en rotation l'élément d'actionnement de la fixation.

Suivant d'autres aspects avantageux de l'invention, l'ensemble de pose comporte l'une ou plusieurs des caractéristiques suivantes, prises isolément ou suivant toutes les combinaisons techniquement possibles :
- au moins une des première et deuxième ouvertures de l'outil est équipée d'une cage à galets, apte à bloquer en rotation une surface de révolution de l'extrémité axiale du corps de fixation et/ou de l'élément d'actionnement de la fixation ;
- une surface radiale du corps de fixation comporte un organe de blocage, apte à s'accoupler avec l'au moins un élément de blocage en position saillante, de sorte à bloquer axialement le corps de fixation dans la première ouverture.

L'invention se rapporte en outre à un procédé de dépose d'une fixation insérée dans au moins deux structures préalablement percées, ladite fixation comprenant : un corps de fixation, s'étendant selon un premier axe ; une pluralité de pinces élastiques, comprenant chacune un bec d'accrochage au contact d'une face des structures ; un organe de blocage disposé sur une surface extérieure du corps et un élément d'actionnement, en saillie par rapport à une extrémité axiale du corps de fixation, l'élément d'actionnement étant mobile en rotation par rapport au corps de fixation et apte à déplacer les pinces élastiques ; le procédé comprenant les étapes suivantes : introduction de l'extrémité axiale du corps de la fixation dans la première ouverture d'un outil de pose tel que décrit ci-dessus ; et introduction de l'élément d'actionnement de la fixation dans la deuxième ouverture de l'outil de pose ; puis introduction de fluide sous pression dans la chambre de pression, de sorte à déplacer les pluralité d'éléments de dans l'organe de blocage du corps de fixation, bloquant axialement la fixation par rapport à l'outil ; puis mise en rotation du dispositif d'actionnement par rapport au corps d'outil, de sorte à entraîner en rotation l'élément d'actionnement par rapport au corps de fixation ; puis extraction de la fixation des structures.

Selon un mode de réalisation, le procédé comprend ensuite les étapes suivantes : interruption de l'introduction de fluide sous pression dans la chambre de pression ; et introduction de fluide sous pression dans la chambre d'éjection, de sorte à déplacer le piston d'éjection vers la deuxième ouverture afin de pousser axialement la fixation hors de l'outil.

L'invention apparaîtra plus clairement à la lecture de la description qui va suivre, donnée uniquement à titre d'exemple non limitatif, et faite en référence aux dessins dans lesquels :
- [Fig. 1] [Fig. 2] [Fig. 3] les figures 1, 2 et 3 sont des vues en coupe longitudinale d'un ensemble de pose selon un mode de réalisation de l'invention, respectivement dans une première, une deuxième et une troisième configurations ; et
- [Fig. 4] la figure 4 est une vue en coupe transversale de l'ensemble de pose dans la deuxième configuration de la figure 2.

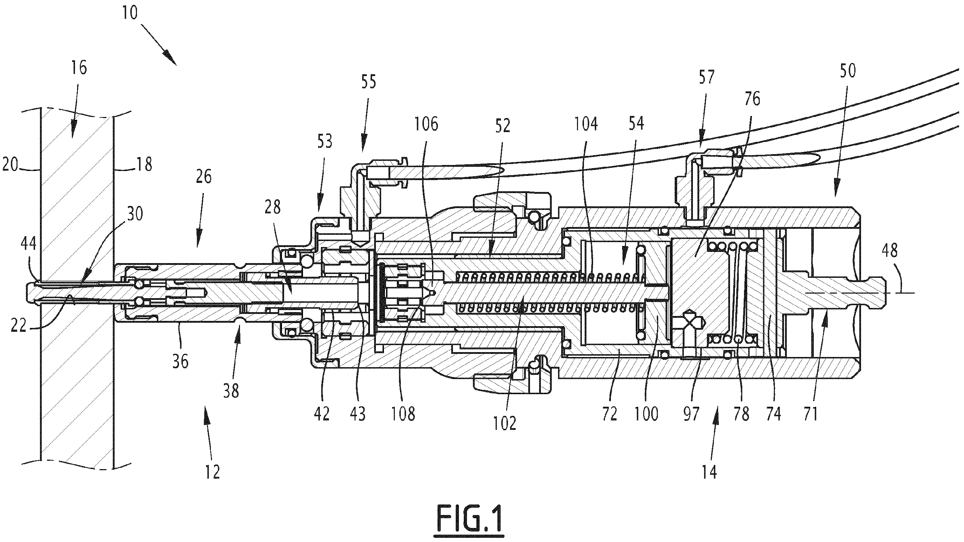

Les figures 1 à 4 montrent un ensemble 10 de pose selon un mode de réalisation de l'invention. L'ensemble 10 comprend une fixation 12 et un outil 14 pour la pose et la dépose de ladite fixation 12.

La fixation 12 est destinée à l'assemblage temporaire d'au moins deux structures 16, visibles sur la figure 1. A des fins de simplification, les structures 16 sont représentées de manière monobloc, définissant deux faces 18, 20 opposées. Un alésage 22 traverse les structures 16 depuis la première 18 jusqu'à la deuxième 20 face.

La fixation 12 s'étend selon un premier axe 24 et comporte un corps 26 de fixation, un élément 28 d'actionnement, des pinces élastiques 30, un écarteur 32 et un dispositif 34 de liaison.

Le corps 26 de fixation présente une forme tubulaire et s'étend selon le premier axe 24, entre une première et une seconde extrémité. Les pinces élastiques 30 et l'écarteur 32 forment une saillie axiale par rapport à la première extrémité, dite extrémité avant. L'élément d'actionnement 28 forme une saillie par rapport à la seconde extrémité, dite extrémité arrière.

Le corps 26 de fixation comporte une surface extérieure 36, sensiblement cylindrique de révolution.

Dans le mode de réalisation représenté, le corps 26 de fixation comporte en outre un organe 38 de blocage, pour le blocage axial dudit corps 26 de fixation par rapport à l'outil 14, comme il sera décrit ultérieurement. Dans le mode de réalisation représenté, l'organe de blocage est une gorge externe 38, ménagée dans la surface extérieure 36 autour du premier axe 24.

L'élément 28 d'actionnement est mobile en rotation et en translation par rapport audit corps 28 de fixation. Plus précisément, une surface intérieure de l'élément 28 d'actionnement porte un taraudage 40 coopérant avec un filetage ménagé sur une surface extérieure du dispositif 34 de liaison.

Une extrémité arrière de l'élément 28 d'actionnement, en saillie par rapport au corps 26 de fixation, comporte une surface extérieure 42, sensiblement cylindrique de révolution.

L'extrémité arrière de l'élément 28 d'actionnement comporte en outre une surface annulaire arrière 43, sensiblement plane et perpendiculaire au premier axe 24.

Les pinces élastiques 30 s'étendent sensiblement parallèlement au premier axe 24 et sont disposées sensiblement régulièrement autour dudit premier axe.

Les pinces élastiques 30 sont destinées à traverser l'alésage 22 des structures 16. Une extrémité avant de chaque pince élastique 30, opposée au corps 26 de fixation, comprend un bec d'accrochage 44, susceptible de venir au contact de la deuxième face 20 des structures 16.

L'écarteur 32 est disposé selon le premier axe 24, entre les pinces élastiques 30. Une extrémité avant de l'écarteur 32, opposée au corps 26 de fixation, comprend une tête élargie 46.

Dans le mode de réalisation représenté, l'élément 28 d'actionnement, les pinces élastiques 30 et l'écarteur 32 sont mobiles axialement par rapport au corps 26 de fixation. En variante non représentée, les pinces élastiques 30 sont mobiles axialement, l'élément 28 d'actionnement et l'écarteur 32 sont fixes axialement par rapport au corps 26 de fixation.

Dans le mode de réalisation représenté, le dispositif 34 de liaison s'étend à l'intérieur du corps 26 de fixation et relie l'élément 28 d'actionnement à l'écarteur 32 de sorte que la translation du dispositif 34 de liaison entraîne la translation de l'écarteur 32 dans le corps 26, ou des pinces élastiques 30 si l'écarteur est fixe. La surface interne du corps 26 comprend une forme non cylindrique, par exemple une forme hexagonale. Le dispositif 34 de liaison comprend une surface externe non cylindrique, par exemple une forme hexagonale, de sorte à permettre la translation du dispositif de liaison 34 dans le corps 26 mais interdire sa rotation.

La figure 1 représente la fixation 12 dans un état d'installation. Dans ledit état d'installation, l'extrémité avant du corps 26 de fixation est au contact de la première face 18 des structures 16 et les pinces élastiques 30 sont disposées dans l'alésage 22. De plus, l'élément 28 d'actionnement est dans une première position par rapport au corps 26 de fixation et la tête élargie 46 de l'écarteur 32 est disposée entre les becs d'accrochage 44 des pinces élastiques 30. Lesdites pinces élastiques sont ainsi dans une conformation déployée, les becs d'accrochage 44 formant une saillie radiale par rapport à l'alésage 22 et venant au contact de la deuxième face 20 des structures 16.

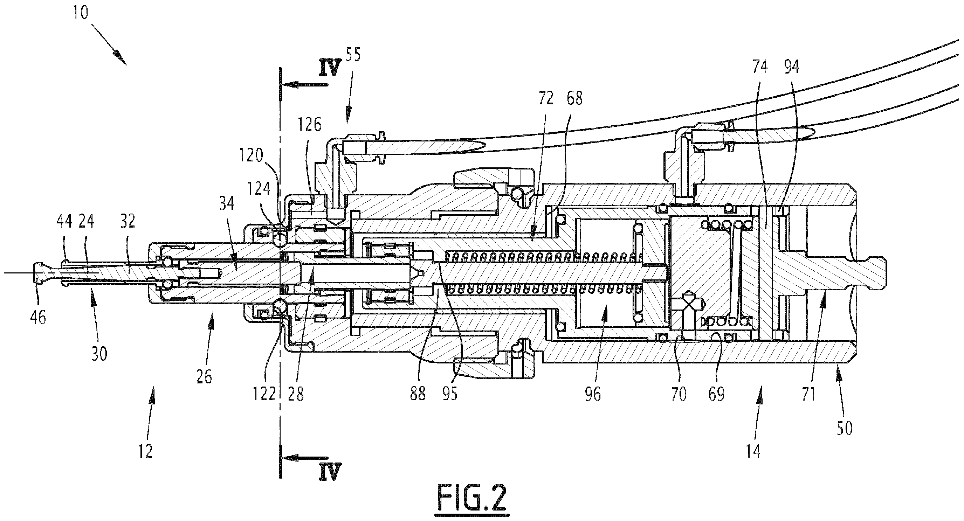

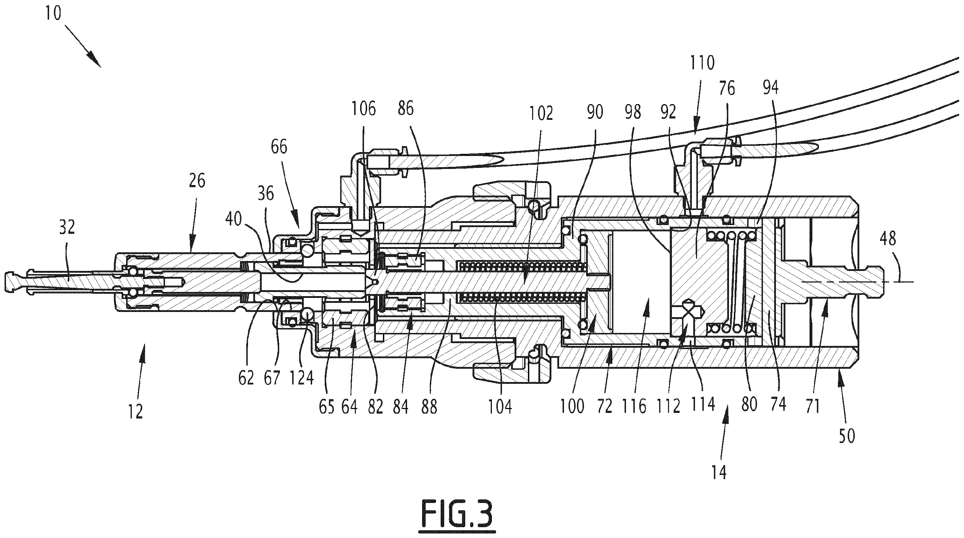

Les figures 2 et 3 représentent la fixation 12 dans un état de démontage. Dans ledit état de démontage, l'élément 28 d'actionnement est dans une deuxième position par rapport au corps 26 de fixation. L'écarteur 32 forme une saillie axiale par rapport aux pinces élastiques 30 de sorte que la tête élargie 46 soit disposée à distance des becs d'accrochage 44. Les pinces élastiques 30 sont ainsi dans une conformation rétractée, les becs d'accrochage 44 étant rapprochés radialement les uns des autres. En conséquence, les pinces élastiques 30 sont aptes à coulisser dans l'alésage 22 des structures 16.

L'outil 14, ou nez de pose, va à présent être décrit.

L'outil 14 s'étend selon un deuxième axe 48 et comprend : un corps 50 d'outil ; un dispositif 52 d'actionnement ; un dispositif 53 de blocage ; un organe 54 d'éjection ; une première arrivée 55 de fluide ; et une deuxième arrivée 57 de fluide.

Le corps 50 d'outil est de forme tubulaire. Une première extrémité du corps 50 d'outil, dite extrémité avant, comporte une première ouverture 62 axiale. Le corps 50 d'outil comprend en outre une première section 64 de blocage en rotation, aménagée à proximité de ladite première ouverture 62 axiale.

La première ouverture 62 axiale est apte à recevoir l'extrémité arrière du corps 26 de la fixation 12. La première section 64 de blocage en rotation est apte à recevoir et à bloquer en rotation ladite extrémité arrière du corps 26.

Dans le mode de réalisation représenté, la première section 64 de blocage comporte une première cage à galets 65, apte à bloquer en rotation la forme de révolution de la première surface radiale 36, au niveau de l'extrémité arrière du corps 26. La première cage à galets est par exemple analogue au dispositif décrit dans le document EP2999571.

En variante non représentée, l'extrémité arrière du corps de fixation comporte une forme anti-rotation, comprenant par exemple des pans ou des méplats, et la première section de blocage comporte une forme complémentaire à ladite forme anti-rotation.

Dans le mode de réalisation représenté, le corps 50 d'outil comprend en outre une section 66 de blocage axial, ménagée entre la première ouverture 62 axiale et la première section 64 de blocage en rotation. La section 66 de blocage axial est notamment définie par une paroi 67 interne, sensiblement cylindrique. La section 66 de blocage axial sera plus précisément décrite ultérieurement.

Dans le mode de réalisation représenté, le corps 50 d'outil comprend en outre : un épaulement interne 68 ; une surface radiale interne 69 ; et une gorge interne 70.

L'épaulement interne 68 est ménagé en arrière de la première section 64 de blocage en rotation et orienté vers l'extrémité arrière du corps 50 d'outil. La surface radiale interne 69 présente une forme sensiblement cylindrique de révolution et s'étend entre l'épaulement interne 68 et l'extrémité arrière du corps 50 d'outil. La gorge interne 70 est ménagée dans la surface radiale interne 69.

Le dispositif 52 d'actionnement comporte : une clé 71 ; un corps 72 de clé ; une goupille 74 ; un bouchon 76 ; et un premier ressort 78 de compression.

La clé 71 est disposée proche de l'extrémité arrière du corps 50 d'outil. La clé 71 comporte une partie avant 80 élargie et une partie arrière plus étroite. Ladite partie arrière est apte à être reliée à un moteur afin d'être entraînée en rotation autour du deuxième axe 48.

Le corps 72 de clé présente une forme tubulaire. Une extrémité avant du corps 72 de clé comporte une deuxième ouverture 82 axiale. Le corps 72 de clé comprend en outre une deuxième section 84 de blocage en rotation.

La deuxième ouverture 82 axiale est apte à recevoir une portion de l'extrémité arrière de l'élément 28 d'actionnement. La deuxième section 84 de blocage en rotation, adjacente à ladite deuxième ouverture 82 axiale, est apte à recevoir et à bloquer en rotation ladite portion d'extrémité arrière de l'élément 28 d'actionnement.

Dans le mode de réalisation représenté, la deuxième section 84 de blocage comporte une deuxième cage à galets 86, apte à bloquer en rotation la forme de révolution de la deuxième surface radiale 42. La deuxième cage à galets 86 est par exemple analogue à la première cage à galets 65. En variante non représentée, la portion d'extrémité arrière de l'élément d'actionnement comporte une forme anti-rotation, comprenant par exemple des pans ou des méplats, et la deuxième section de blocage comporte une forme complémentaire à ladite forme anti-rotation.

Dans le mode de réalisation représenté, le corps 72 de clé comprend en outre : une couronne 88 interne ; un premier épaulement 90 ; un deuxième épaulement 92 interne ; et deux orifices 94 oblongs.

La couronne 88 interne est à proximité de la deuxième section 84 de blocage en rotation, à l'opposé de la deuxième ouverture 82. La couronne 88 interne comporte un orifice 95 central, disposé selon le deuxième axe 48.

Les premier 90 et deuxième 92 épaulements sont disposés successivement le long du deuxième axe 48 à partir de la couronne 88 interne.

Le corps 72 de clé présente un premier, un deuxième et un troisième diamètres internes croissants, respectivement entre la couronne 88 interne et le premier épaulement 90, entre le premier épaulement 90 et le deuxième épaulement 92 interne, et en arrière du deuxième épaulement 92 interne.

Les deux orifices 94 oblongs sont disposés en arrière du deuxième épaulement 92 interne, proches de l'extrémité arrière du corps 72 de clé. La goupille 74 est disposée transversalement par rapport au deuxième axe 48, chaque extrémité de ladite goupille étant disposée dans l'un desdits orifices 94 oblongs. Les orifices 94 oblongs ont une dimension axiale plus grande que le diamètre de la section de la goupille, afin de permettre un jeu relatif de la goupille dans les orifices 94 oblongs. Les orifices 94 oblongs peuvent prendre la forme d'une rainure ou toute autre forme permettant ce jeu relatif.

En outre, la goupille 74 est insérée dans un orifice traversant de la partie avant 80 de la clé 71. Un logement interne 96 est ainsi défini dans le corps 72 de clé, entre la couronne 88 interne et la clé 71. Les deux orifices 94 oblongs et la goupille 74 matérialisent un jeu axial du corps 72 de clé par rapport à la clé 71.

Le bouchon 76 est disposé dans le logement interne 96, entre la clé 71 et le deuxième épaulement 92 interne du corps 72 de clé.

Le bouchon 76 présente une surface latérale 97 et une surface frontale 98. La surface latérale 97 est sensiblement cylindrique de révolution et présente un diamètre externe légèrement supérieur au troisième diamètre interne du corps 72 de clé de sorte que le bouchon 76 est monté serré dans le corps de clé et bloque la diffusion de fluide du logement interne vers le premier ressort 78. La surface frontale est sensiblement perpendiculaire au deuxième axe 48 et orientée vers le premier épaulement 90.

Le premier ressort 78 de compression est disposé axialement entre la clé 71 et le bouchon 76, à l'opposé de la surface frontale 98. Dans les configurations des figures 1 à 3, le premier ressort 78 est dans un état semi-comprimé, de sorte à repousser le bouchon 76 contre le deuxième épaulement 92 interne du corps 72 de clé.

Le dispositif 52 d'actionnement est mobile en rotation à l'intérieur du corps 50 de l'outil 14. Par ailleurs, le dispositif 52 d'actionnement est mobile en translation à l'intérieur dudit corps 50 d'outil, selon une course limitée par l'épaulement interne 68 du corps d'outil, apte à venir en butée axiale contre le premier épaulement 90 du corps de clé.

L'organe 54 d'éjection comporte : un piston 100 ; une tige 102 d'éjection ; et un deuxième ressort 104 de compression.

Le piston 100 est disposé dans le logement interne 96 du corps 72 de clé, entre le premier 90 épaulement et la surface frontale 98 du bouchon 76. Le piston 100 présente un diamètre externe sensiblement égal au deuxième diamètre interne du corps 72 de clé.

La tige 102 d'éjection s'étend dans le corps 72 de clé et traverse l'orifice 95 central de la couronne 88 interne. Une extrémité arrière de la tige 102 est solidaire du piston 100. Une extrémité avant de la tige 102 comporte une tête 106 d'éjection, disposée en avant par rapport à la couronne 88 interne. Un diamètre de ladite tête 106 d'éjection est supérieur à un diamètre de l'orifice 95 central. La tête 106 d'éjection comporte une face frontale 108, orientée vers la première ouverture 62 du corps 50 d'outil. Dans le mode de réalisation représenté, ladite face frontale 108 est sensiblement plane.

Le piston 100 et la tige 102 d'éjection sont mobiles axialement à l'intérieur du corps 72 de clé, entre une première et une deuxième positions axiales. Dans la première position axiale, visible sur la figure 1, la tête 106 d'éjection est disposée dans la deuxième section 84 de blocage et vient en butée axiale contre la couronne 88 interne ; et le piston 100 est en butée contre la surface frontale 98 du bouchon 76. Dans la deuxième position axiale, visible sur la figure 3, le piston 100 vient en butée contre le premier épaulement 90 du corps 72 de clé et la tête 106 d'éjection est en saillie par rapport à la deuxième ouverture 82 axiale dudit corps de clé.

Le deuxième ressort 104 de compression est disposé dans le logement interne 96 du corps 72 de clé, autour de la tige 102 d'éjection et entre la couronne 88 interne et le piston 100.

La deuxième arrivée 57 de fluide comporte une entrée 110, un passage intermédiaire 112 et un canal 114 de sortie. L'entrée 110 comporte un orifice traversant latéralement le corps 50 d'outil et débouchant sur la gorge interne 70 dudit corps d'outil. Le passage intermédiaire 112 est un trou traversant latéralement le corps 72 de clé et ouvrant d'une part sur la gorge interne 70 du corps d'outil et d'autre part sur la surface latérale 97 du bouchon 76. Le canal 114 de sortie est ménagé dans ledit bouchon 76, entre la surface latérale 97 et la surface frontale 98.

Le premier ressort 78 de compression repousse le corps 72 de clé par rapport à clé 71, qui est fixe en translation par rapport à l'outil 14, afin de compenser la translation de l'élément 28 d'actionnement dans le corps de l'agrafe, en direction de la première extrémité du corps 50, lorsque l'élément 28 d'actionnement est vissé sur le dispositif 34 de liaison.

Par ailleurs, la gorge interne 70 du corps 50 d'outil présente une largeur selon le deuxième axe 48, autorisant un jeu axial du corps 72 de clé par rapport audit corps 50 d'outil en conservant le passage intermédiaire 112 en vis-à-vis de ladite gorge interne 70. En particulier, la largeur de la gorge interne 70 est de préférence configurée pour que ladite gorge interne soit en vis-à-vis du passage intermédiaire 112, quelle que soit la position axiale de la goupille 74 par rapport aux orifices 94 oblongs.

De part et d'autre de la gorge interne 70 selon le deuxième axe 48, un diamètre interne du corps 50 d'outil est sensiblement égal à un diamètre externe du corps 72 de clé de part et d'autre du passage intermédiaire 112.

Ainsi, la deuxième arrivée 57 de fluide permet l'introduction d'un fluide depuis l'extérieur de l'outil 14 vers le logement interne 96, entre le bouchon 76 et le piston 100. Comme décrit ci-après, une telle introduction de fluide est apte à élargir axialement une chambre d'éjection 116, entre le bouchon 76 et le piston 100. Le deuxième ressort 104 présente une raideur suffisante pour maintenir le piston 100 contre le bouchon 76 en l'absence de fluide dans la chambre d'éjection 116, comme représenté sur la figure 2.

Le dispositif 53 de blocage comporte : une chambre 120 de pression ; au moins un conduit 122 ; et au moins un élément 124 de blocage.

La chambre 120 de pression présente une forme annulaire et est ménagée dans le corps 50 d'outil, dans la paroi 67 interne de la section 66 de blocage axial.

L'au moins un conduit 122 s'étend radialement entre la chambre 120 de pression et la section 66 de blocage axial.

L'au moins un élément 124 de blocage est mobile dans l'au moins un conduit entre une position rétractée et une position saillante. Dans ladite position saillante, l'au moins un élément 124 de blocage est en saillie radiale interne dans la section 66 de blocage axial, par rapport à la paroi 67 interne.

De préférence, l'au moins un élément 124 de blocage est apte à se déplacer dans l'au moins un conduit tout en assurant sensiblement une étanchéité fluidique entre la chambre 120 de pression et la section 66 de blocage axial.

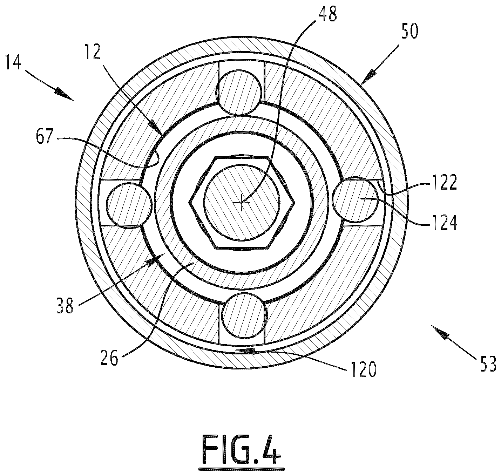

Dans le mode de réalisation représenté, comme visible sur la figure 4, le dispositif 53 de blocage comporte une pluralité de conduits 122, disposés angulairement autour du deuxième axe 48 ; et l'au moins un élément de blocage comporte une pluralité de billes 124, chacune desdites billes étant logée dans l'un desdits conduits et apte à se déplacer entre la position rétractée et la position saillante.

La première arrivée 55 de fluide comprend un canal 126 ménagé entre une surface externe du corps 50 d'outil et la chambre 120 de pression. Ainsi, la première arrivée 55 de fluide permet l'introduction d'un fluide depuis l'extérieur de l'outil 14 vers la chambre 120 de pression, de sorte à déplacer les billes 124 dans les conduits 122 vers la position saillante.

Dans le mode de réalisation représenté, les première 55 et deuxième 57 arrivées de fluide de l'outil 14 sont reliées à des alimentations en gaz sous pression, préférentiellement à des alimentations en air comprimé.

Dans la première configuration de l'ensemble 10, visible sur la figure 1, la fixation 12 est dissociée de l'outil 14 et sur le point d'être assemblée audit outil. Plus précisément, le corps 26 de fixation et l'élément 28 d'actionnement sont à distance, respectivement, des première 64 et deuxième 84 sections de blocage en rotation. Sur la figure 1, l'extrémité arrière du corps 26 de fixation est disposé au niveau de la première ouverture 62 axiale du corps 50 d'outil, les premier 24 et deuxième 48 axes étant confondus.

De plus, dans la première configuration de l'ensemble 10, les première 55 et deuxième 57 arrivées de fluide ne sont pas alimentées en air comprimé. Sous l'action du deuxième ressort 104 de compression, le piston 100 et la tige 102 d'éjection sont dans la première position axiale, en arrière du corps 72 de clé. Les billes 124 sont libres de se déplacer dans les conduits 122 entre la position saillante et la position rétractée.

Par ailleurs, dans la première configuration, le premier épaulement 90 du corps 72 de clé est sensiblement au contact de l'épaulement interne 69 du corps 50 d'outil ; et les extrémités de la goupille 74 sont au contact des extrémités arrière des orifices oblongs 94.

Dans la deuxième configuration de l'ensemble 10, visible sur la figure 2 et sur la figure 4, la fixation 12 est assemblée à l'outil 14, les premier 24 et deuxième 48 axes étant confondus. Plus précisément, les extrémités arrière du corps 26 de fixation et de l'élément 28 d'actionnement sont maintenues en rotation par les cages à galet 65, 86, respectivement des première 64 et deuxième 84 sections de blocage en rotation. La gorge externe 38 du corps 26 d'outil est axialement en vis-à-vis des conduits 122 du dispositif 53 de blocage.

De plus, dans la deuxième configuration de l'ensemble 10, la première arrivée 55 de fluide est alimentée en air comprimé ; et les billes 124 sont en position saillante et logées dans la gorge externe 38 du corps 26 de fixation.

Par ailleurs, dans la deuxième configuration, le premier épaulement 90 du corps 72 de clé est à distance axiale de l'épaulement interne 69 du corps 50 d'outil ; et les extrémités de la goupille 74 sont à distance axiale des extrémités arrière des orifices oblongs 94.

Par ailleurs, dans la deuxième configuration, la deuxième arrivée 57 de fluide n'est pas alimentée en air comprimé et le piston 100 et la tige 102 d'éjection sont dans la première position axiale, en arrière du corps 72 de clé. La face frontale 108 de la tête 106 d'éjection est au contact de la surface arrière 43 de l'élément 28 d'actionnement, ledit élément d'actionnement étant reçu dans la deuxième section 84 de blocage.

Dans la troisième configuration de l'ensemble 10, visible sur la figure 3, la fixation 12 est en cours d'éjection hors de l'outil 14. Le corps 26 de fixation et l'élément 28 d'actionnement sont à distance axiale, respectivement, des première 64 et deuxième 84 sections de blocage en rotation.

Plus précisément, dans la troisième configuration, la deuxième arrivée 57 de fluide est alimentée en air comprimé et le piston 100 et la tige 102 d'éjection sont dans la deuxième position axiale, le piston 100 venant au contact du premier épaulement 90. Par ailleurs, la face frontale 108 de la tête 106 d'éjection est au contact de la surface arrière 43 de l'élément 28 d'actionnement.

De plus, dans la troisième configuration de l'ensemble 10, la première arrivée 55 de fluide n'est pas alimentée en air comprimé. Les billes 124 sont libres de se déplacer dans les conduits 122 entre la position saillante et la position rétractée.

De plus, dans la troisième configuration de l'ensemble 10, le premier épaulement 90 du corps 72 de clé est sensiblement au contact de l'épaulement interne 69 du corps 50 d'outil ; et les extrémités de la goupille 74 sont au contact des extrémités arrière des orifices oblongs 94.

Un procédé de mise en oeuvre de l'ensemble 10 va maintenant être décrit. Ledit procédé se rapporte à la dépose de la fixation 12, préalablement assemblée aux structures 16.

Au début du procédé, la fixation 12 est dans l'état d'installation décrit précédemment. Par ailleurs, on considère que l'extrémité arrière du corps 50 d'outil est reliée à un automate de pose (non représenté), ledit automate comprenant un moteur (non représenté) relié à la clé 71.

En l'absence d'alimentation en air comprimé des première 55 et deuxième 57 arrivées de fluide, l'outil 14 est approché de la fixation 12 et les extrémités arrière de l'élément 28 d'actionnement et du corps 26 de fixation sont introduits dans la première ouverture 62, de sorte que les premier 24 et deuxième 48 axes soient confondus. L'ensemble 10 est ainsi dans la première configuration de la figure 1.

Un déplacement axial vers l'avant de l'outil 14 est poursuivi, jusqu'à la mise en contact de la face frontale 108 de la tête 106 d'éjection avec la surface arrière 43 de l'élément 28 d'actionnement. Les extrémités arrière du corps 26 de fixation et de l'élément 28 d'actionnement viennent en prise avec les cages à galet 65, 86 des première 64 et deuxième 84 sections de blocage en rotation. La gorge externe 38 du corps 26 d'outil est axialement en vis-à-vis des conduits 122 du dispositif 53 de blocage.

La première arrivée 55 de fluide est alors alimentée en air comprimé. Une surpression d'air est ainsi appliquée dans la chambre 120 de pression et les billes 124 sont repoussées en position saillante. Lesdites billes 124 se logent ainsi dans la gorge externe 38 du corps 26 de fixation, bloquant axialement la fixation 12 par rapport à l'outil 14.

Le moteur de l'automate est ensuite actionné, de sorte à entraîner en rotation la clé 71 dans un premier sens de rotation. L'élément 28 d'actionnement est ainsi entraîné en rotation par la deuxième cage à galets 86 du corps 72 de clé, tandis que le corps 26 de fixation est maintenu fixe par la première cage à galets 65.

Par l'intermédiaire du dispositif 34 de liaison, la rotation de l'élément 28 d'actionnement par rapport au corps 32 de fixation fait passer la fixation 12 de l'état d'installation, dans lequel la tête élargie 46 de l'écarteur 32 est disposée entre les becs d'accrochage 44 des pinces élastiques 30, à l'état de démontage, dans lequel lesdits becs d'accrochage 44 sont rapprochés les uns des autres. A ce stade du procédé, l'ensemble 10 est dans la deuxième configuration des figures 2 et 4.

Dans le mode de réalisation représenté, le passage de la fixation 12 de l'état d'installation à l'état de démontage se traduit par un déplacement hélicoïdal vers l'arrière de l'élément 28 d'actionnement par rapport au corps 26 de fixation. Durant la rotation de la clé 71, le corps 72 de clé est repoussé vers l'arrière du corps 50 d'outil par la tête 106 d'éjection, prise en sandwich entre l'élément 28 d'actionnement et la couronne 88 interne. Le premier épaulement 90 du corps 72 de clé s'écarte donc de l'épaulement interne 69 du corps 50 d'outil. La clé 71 étant fixe en translation par rapport au corps 50 d'outil, les extrémités de la goupille 74 s'écartent des extrémités arrière des orifices oblongs 94 et le premier ressort 78 se comprime légèrement.

Selon une variante de l'invention, dans laquelle l'élément 28 d'actionnement de la fixation 12 est fixe en translation par rapport au corps 26 de fixation, la rotation de la clé 71 n'entraîne pas de déplacement vers l'arrière du corps 72 de clé par rapport au corps 50 d'outil.

La fixation 12 étant à l'état de démontage, la rotation du moteur de l'automate est interrompue, l'alimentation en air comprimé de la première arrivée 55 de fluide est maintenue et l'automate (non représenté) est déplacé, de sorte à extraire les pinces élastiques 30 de l'alésage 22 des structures. La fixation 12 est par exemple transportée par l'automate jusqu'à un récipient de récupération (non représenté).

Ensuite, l'alimentation en air comprimé de la première arrivée 55 de fluide est interrompue. Ensuite ou simultanément, la deuxième arrivée 57 de fluide est alimentée en air comprimé, conduisant à l'expansion de la chambre d'éjection 116 entre le bouchon 76 et le piston 100. La pression de l'air compense l'action du deuxième ressort 104 et le piston 100 et la tige 102 d'éjection sont repoussés vers l'avant, jusqu'à la deuxième position axiale dans laquelle le piston 100 contacte le premier épaulement 90 du corps de clé. En parallèle, le premier ressort 78 se détend et le premier épaulement 90 vient au contact de l'épaulement interne 69 du corps 50 d'outil.

La face frontale 108 de la tête 106 d'éjection pousse ainsi vers l'avant la surface arrière 43 de l'élément 28 d'actionnement.

A ce stade du procédé, l'ensemble 10 est dans la troisième configuration de la figure 3. La course du piston 100 est calculée pour éjecter la fixation hors du nez de pose. Le corps 26 de fixation n'étant plus maintenu axialement par les billes 124, la fixation 12 est ainsi poussée vers l'avant hors du nez de pose.

Ensuite, l'alimentation en air comprimé de la deuxième arrivée 57 de fluide est interrompue. Le deuxième ressort 104 se détend et le piston 100 et la tige 102 d'éjection se déplacent vers l'arrière, jusqu'à la première position axiale.

Un procédé inverse permet la pose de la fixation 12, afin de l'assembler aux structures 16. Au cours du procédé de pose, le moteur de l'automate est mis en route dans un second sens de rotation, opposé au premier sens.

## Revendications

1. Outil (14) de pose, pour l'assemblage d'une fixation (12) avec au moins deux structures (16) préalablement percées, ladite fixation comprenant : un corps (26) de fixation, s'étendant selon un premier axe (24) ; et un élément (28) d'actionnement, en saillie par rapport à une extrémité axiale du corps de fixation, l'élément d'actionnement étant mobile en rotation par rapport au corps de fixation ;
l'outil de pose comprenant :
- un corps (50) d'outil de forme tubulaire, s'étendant selon un deuxième axe (48) ; une extrémité axiale du corps d'outil comprenant une première ouverture (62) apte à recevoir et à bloquer en rotation l'extrémité axiale du corps (26) de fixation ;
- un dispositif (52) d'actionnement, reçu à l'intérieur du corps d'outil et mobile en rotation par rapport audit corps d'outil, le dispositif d'actionnement définissant un logement (96) interne, une extrémité axiale du dispositif d'actionnement comprenant une deuxième ouverture (82) débouchant sur le logement interne, la deuxième ouverture étant apte à recevoir et à bloquer en rotation l'élément (28) d'actionnement de la fixation ;
l'outil de pose étant **caractérisé en ce qu'**il comprend en outre :
- une chambre (120) de pression, de forme annulaire, ménagée dans le corps (50) d'outil autour de la première ouverture (62) ;
- au moins un conduit (122), disposé radialement par rapport au deuxième axe (48) et reliant la chambre de pression à la première ouverture ;
- au moins un élément (124) de blocage, mobile dans l'au moins un conduit entre une position rétractée et une position saillante dans la première ouverture (62) ; et
- une première arrivée (55) de fluide, ouvrant sur la chambre de pression ;
l'outil de pose étant configuré de sorte qu'une entrée de fluide dans la chambre de pression soit apte à déplacer l'au moins un élément de blocage (124) vers la position saillante.

2. Outil de pose selon la revendication 1, comprenant une pluralité de conduits (122) répartis angulairement autour du deuxième axe ; et une pluralité d'éléments (124) de blocage, chacun desdits éléments de blocage étant mobile dans l'un desdits conduits entre la position rétractée et la position saillante, les éléments de blocage étant préférentiellement des billes.

3. Outil de pose selon la revendication 1 ou 2, comprenant en outre : un piston (100) d'éjection, mobile axialement dans le logement interne, de sorte à définir une chambre (116) d'éjection à l'intérieur dudit logement interne ; et une deuxième arrivée (57) de fluide, ouvrant sur la chambre d'éjection; l'outil de pose étant configuré de sorte qu'une surpression de fluide dans la chambre d'éjection soit apte à déplacer le piston d'éjection vers la deuxième ouverture (82, 84).

4. Outil de pose selon la revendication 3, comprenant en outre une tige (102) d'éjection s'étendant selon le deuxième axe (48) dans le logement (96) interne du dispositif d'actionnement, une première extrémité de la tige d'éjection étant fixée au piston (100) d'éjection, une seconde extrémité (106) de la tige d'éjection étant orientée vers la première ouverture (62) du corps d'outil.

5. Outil de pose selon la revendication 4, comprenant en outre un ressort de compression (104) disposé dans le logement interne (96) autour de la tige (102) d'éjection, entre une couronne (88) interne du dispositif (52) d'actionnement, disposée à proximité de la deuxième ouverture (84), et le piston (100).

6. Outil de pose selon l'une des revendications précédentes, dans lequel le dispositif (52) d'actionnement comporte : une clé (71), apte à être entraînée en rotation par un moteur ; et un corps (72) de clé, comprenant le logement (96) et la deuxième ouverture (82) ; un jeu axial étant ménagé (74, 94) entre la clé et le corps de clé.

7. Outil (14) de pose selon l'une des revendications précédentes, dans lequel au moins une des première (62, 64) et deuxième (82, 84) ouvertures de l'outil (14) est équipée d'une cage (65, 86) à galets ou d'une forme anti-rotation, apte à bloquer en rotation une surface externe du corps (26) de fixation et/ou de l'élément (28) d'actionnement de la fixation (12).

8. Procédé de dépose d'une fixation (12) insérée dans au moins deux structures (16) préalablement percées, ladite fixation comprenant : un corps (26) de fixation, s'étendant selon un premier axe (24) ; une pluralité de pinces élastiques (30), comprenant chacune un bec d'accrochage (44) au contact d'une face (20) des structures (16) ; un organe (38) de blocage disposé sur une surface extérieure du corps (26) et un élément (28) d'actionnement, en saillie par rapport à une extrémité axiale du corps (26) de fixation, l'élément d'actionnement étant mobile en rotation par rapport au corps de fixation et apte à déplacer les pinces élastiques ; le procédé comprenant les étapes suivantes :
- introduction de l'extrémité axiale du corps (26) de la fixation (12) dans la première ouverture (62, 64) d'un outil (14) de pose selon l'une des revendications précédentes ; et introduction de l'élément (28) d'actionnement de la fixation dans la deuxième ouverture (82, 84) de l'outil de pose ; puis
- introduction de fluide sous pression dans la chambre (120) de pression, de sorte à déplacer les pluralité d'éléments (124) de dans l'organe (38) de blocage du corps (26) de fixation, bloquant axialement la fixation (12) par rapport à l'outil (14) ; puis
- mise en rotation du dispositif (52) d'actionnement par rapport au corps (50) d'outil, de sorte à entraîner en rotation l'élément (28) d'actionnement par rapport au corps (26) de fixation ; puis
- extraction de la fixation (12) des structures.

9. Procédé de dépose selon la revendication 8, dans lequel l'outil (14) de pose est selon l'une des revendications 3 à 7, le procédé comprenant ensuite les étapes suivantes :
- interruption de l'introduction de fluide sous pression dans la chambre (120) de pression ; et
- introduction de fluide sous pression dans la chambre (116) d'éjection, de sorte à déplacer le piston (100) d'éjection vers la deuxième ouverture (82) afin de pousser axialement la fixation (12) hors de l'outil (14).
